# EUROPEAN PATENT SPECIFICATION

(11) **EP 2 343 218 B1**
(45) Date of publication and mention of the grant of the patent: **05.03.2014**
(21) Application number: 09838337.5
(22) Date of filing: 11.05.2009
(51) Int. Cl.: B60R 16/02, H02G 11/00, B60R 16/027

(54) **MOUNTING DEVICE FOR WIRE HARNESS FOR SLIDE DOOR**
MONTAGEVORRICHTUNG FÜR DEN KABELBAUM EINER SCHIEBETÜR
DISPOSITIF DE MONTAGE DE FAISCEAU DE CÂBLES POUR PORTE COULISSANTE

(30) Priority: 19.01.2009 JP 2009008378
(43) Date of publication of application: 13.07.2011
(73) Proprietor: Sumitomo Wiring Systems, Ltd., Yokkaichi-shi, Mie 510-8503 (JP)
(72) Inventor: KIDA Yuuji, Yokkaichi-shi Mie 510-8503 (JP); KOBAYASHI Yoshinao, Yokkaichi-shi Mie 510-8503 (JP)
(74) Representative: Müller-Boré & Partner Patentanwälte PartG mbB
(86) International application number: PCT/JP2009/058759
(87) International publication number: WO 2010/082370

(56) References cited:
- WO-A1-2010/010755
- JP-A- 2001 354 085
- JP-A- 2003 189 451
- JP-A- 2008 099 499
- US-A1- 2007 119 610
- US-A1- 2008 169 127

## Description

### TECHNICAL FIELD

The present invention relates to a wire harness-mounting apparatus for a slide door. More particularly the present invention is intended to prevent a redundant portion of the wire harness from hanging when the slide door is disposed at an intermediate position during an opening motion or a closing motion thereof.

### BACKGROUND ART

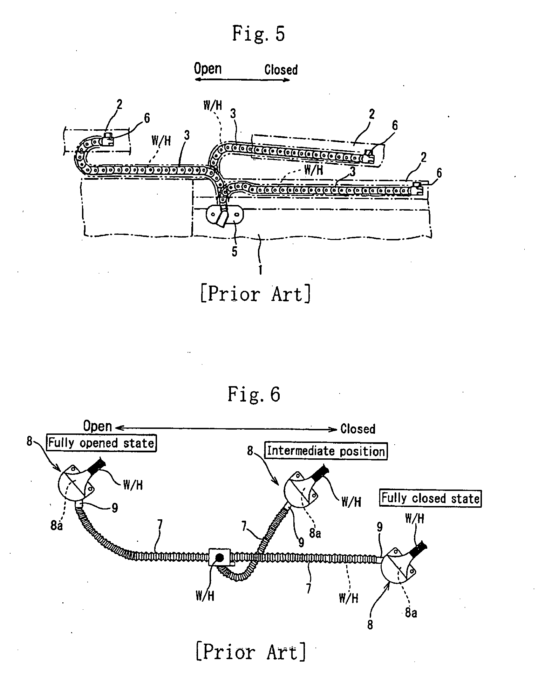

To always feed electricity to electric parts disposed at the slide door side, a wire harness is cross-wired between the slide door and a car body. As shown in Fig. 5, as a wiring construction of this kind, in Japanese Patent Applications Laid-Open No. 2004-25999 (patent document 1), there is proposed a construction in which the wire harness W/H inserted into the caterpillar-shaped cable guide 3 constructed of a plurality of link members is cross-wired between the slide door 2 and the car body 1 in the shape of S.

By sheathing the wire harness W/H with the caterpillar-shaped cable guide 3, it is possible to prevent the wire harness W/H from hanging when the door is opened and closed because the cable guide 3 has a high strength. But when the wire harness W/H is wired between the car body 1 and the slide door 2 by using the cable guide 3, it is necessary to connect the car body 1 and the slide door 2 to each other not in the shortest distance but in the shape of S. Thus the construction disclosed in the patent document 1 has the problem that the product cost increases and it is impossible to make the portion where the wire harness is cross-wired compact owing to the use of the cable guide 3. In addition, when the slide door 2 is opened and closed, the slide door 2 tilts toward the inside of the car body and in the longitudinal direction of the car body 1. To cope with the vertical movement of the slide door 2, it is necessary to provide supporting devices 5, 6 with a vertically movable mechanism capable of vertically swinging. Owing to the addition of the mechanism, there arises a problem that the construction is more complicated and increases the cost.

As disclosed in Japanese Patent Applications Laid-Open No. 2008-168726 (patent document 2), the present applicant proposed the apparatus for supporting the wire harness W/H sheathed with the corrugate tube 7 and cross-wired between the car body 1 and the slide door 2. The apparatus allows the wire harness W/H to follow an opening motion of the slide door 2 or a closing motion thereof with the wire harness W/H being curved upward as shown in Fig. 6.

More specifically the fan-shaped through-hole 8a through which the wire harness is inserted is formed inside the fixed member (door-side bracket) fixed to the slide door 2. The bendable guiding/supporting cylinder 9 holding the wire harness W/H sheathed with the corrugate tube and inserted therethrough is rotatably fitted in the circular arc-shaped guide portion (not shown) disposed on the inner surface of the front end of the through-hole 8a.

In the above-described construction, the bendable guiding/supporting cylinder 9 is rotated in the shape of a circular arc during an opening motion of the slide door 2 or a closing motion thereof to upward curve the wire harness W/H cross-wired between the car body 1 and the slide door 2. Thereby the wire harness W/H is capable of smoothly following the vertical movement of the slide door 2. Therefore this construction eliminates the need for providing the apparatus with the vertically movable mechanism unlike the above-described construction in which the cable guide 3 is used. Thus the construction allows the product cost to be decreased and the apparatus to be made compact. But when the slide door is disposed at an intermediate position during the opening motion of the slide door 2 or the closing motion thereof, the distance between the door-side bracket and the car body-side bracket becomes short. Thereby the construction of the patent document 2 has a problem that a redundant portion of the wire harness is liable to hang.

### PRIOR ART DOCUMENT

### PATENT DOCUMENT

Patent document 1: Japanese Patent Applications Laid-Open No. 2004-25999
Patent document 2: Japanese Patent Applications Laid-Open No. 2008-168726

US 2008/0169127 A1 discloses a power supply device comprising a protector for receiving a wiring harness and a harness winding section to regulate a minimum radius of curvature of the wiring harness, defining the preamble of claim 1.
US 2007/0119610 A1 discloses a harness structure for a sliding door comprising a corrugate tube.

### SUMMARY OF THE INVENTION

### PROBLEM TO BE SOLVED BY THE INVENTION

The present invention has been made in view of the above-described problem. It is an object of the present invention to prevent a redundant portion of a wire harness from hanging when the slide door is disposed at an intermediate position during the opening motion of the slide door or the closing motion thereof by a construction which can be produced at a low cost and is simple.

### MEANS FOR SOLVING THE PROBLEM

To solve the above-described problem, the present invention provides a wire harness-mounting apparatus for a slide door comprising: a corrugate tube for sheathing a wire harness spanned between a car body and the slide door; a door-side bracket to be fixed to the slide door; a guide case rotatably mounted on said door-side bracket; a first torsion coil spring interposed between the guide case and the door-side bracket, such that the guide case is urged upward; and a holding plate which contacts the corrugate tube and is rotatably mounted on the guide case through a second torsion coil spring such that the holding plate is urged upward by the torsion coil spring Thus, the corrugate tube sheathing the wire harness is disposed in a movement region where the wire harness follows the opening motion of the slide door or the closing motion thereof with the wire harness being curved upward, whereby a redundant portion of the wire harness curved upward is prevented from hanging.

As described above, the wire harness is urged upward by disposing the holding plate rotatably supported through the torsion coil spring in the movement region where the wire harness spanned between the car body and the slide door follows the opening motion of the slide door or the closing motion thereof with the wire harness being curved upward and by bringing the holding plate into contact with the corrugate tube sheathing the wire harness. A pull strength acting on the wire harness decreases at a position intermediate between a position where the slide door is fully opened and a position where the slide door is fully closed. Therefore it is possible to lift the wire harness by an urging force of the holding plate. Thereby it is effectively prevent a redundant portion of the wire harness from hanging by only disposing the holding plate in the above-described region, unlike the conventional construction in which the wire harness is liable to hang at the intermediate position.

The wire harness spanned between the car body and the slide door may be composed of a plurality of bundled round electric wires whose cores are insulated with coating or may be composed of a laminated body of a plurality of band-shaped flat harnesses.

The corrugate tube sheathing the wire harness is made of a molding of resin such as polypropylene, nylon, and the like and has annular mountain and valley portions formed thereon alternately in its axial direction. The corrugate tube can be easily bent in a desired direction and is suitable as a material for sheathing the wire harness which operates flexibly when the door is opened and closed and particularly has advantages that it can be made compact as the sheathing material and is inexpensive.

It is preferable that a door-side portion of the wire harness is inserted through and supported by a door-side bracket fixed to the slide door, and a guide case separate from the door-side bracket is provided;
the guide case comprises a horizontally extended linear guide portion, one end of which is continuous with a wire harness insertion portion of the door-side bracket and a rotation guide portion spreading like a fan from the other end of the linear guide portion; and
the shaft of the holding plate is mounted at a lower portion of a smaller-diameter side of the rotation guide portion, and it is preferable that the holding plate has an upward circular arc-shaped configuration.

According to the above-described construction, the wire harness inserted into the rotation guide portion through the wire harness insertion portion of the door-side bracket and the linear guide portion of the guide case is vertically movable inside the rotation guide portion which spreads like a fan. Therefore during the opening motion of the slide door or the closing motion thereof, the wire harness spanned between the car body and the slide door is capable of smoothly following the movement of the slide door with the wire harness being curved upward.

As described above, the shaft of the holding plate is mounted at the lower portion of the smaller-diameter side of the rotation guide portion, and the holding plate has the upward circular arc-shaped configuration. Therefore it is possible to always apply an upward urging force to the wire harness inserted through the rotation guide portion.

As the torsion coil spring to be mounted on the holding plate, it is preferable that the torsion coil spring is wound around the periphery of left-side and right-side shafts provided at the proximal end of the holding plate. It is also preferable that one end of one torsion coil spring and that of the other torsion coil spring are connected to each other in the shape of approximately U in a plan view to form a connection portion and that the connection portion is disposed below the holding plate. It is preferable to construct the guide case of a pair of left and right members and provide a bearing portion for rotatably supporting the shaft of the holding plate at the lower portion of the smaller-diameter side of the rotation guide portion disposed on an inner side surface of each of the left and right members of the guide case. It is also preferable to extend the other side of each torsion coil spring in a direction opposite to a direction in which one side thereof is positioned to form locking portions bent outward and lock the locking portions to locking holes respectively formed on the inner side surface of the guide case so that the torsion coil springs urge the holding plate upward.

As described above, a shaft of the guide case is rotatably mounted on a door-side bracket; a torsion coil spring is interposed between the guide case and the door-side bracket; and the wire harness held by the guide case and the door-side bracket is urged upward.

As described above, by rotatably mounting the shaft of the guide case on the door-side bracket, the cross-wired wire harness is capable of following the opening motion of the slide door or the closing motion thereof more smoothly. By rotating the guide case according to the movement of the slide door, it is possible to decrease a load to be applied to the wire harness.

Further by interposing the torsion coil spring between the guide case and the door-side bracket and upward urging the wire harness held by the guide case and the door-side bracket, it is possible to prevent the wire harness from hanging. Further by downward extending the cross-wired portion of the wire harness W/H to absorb a load applied to the wire harness from above, for example, a load applied thereto when it is trodden under foot by a driver or the like, it is possible to prevent the wire harness from being damaged. That is, the above-described construction is capable of enhancing the degree of freedom in the vertical operation of the cross-wired wire harness.

It is preferable to compose the door-side bracket of a pair of left and right members and rotatably sandwich one end of the linear guide portion of the guide case between the left and right members. More specifically it is preferable to fix the door-side bracket to the slide door in a state in which shafts provided on left and right outer surfaces of the one end of the linear guide portion of the guide case are rotatably supported by the bearing portion provided inside the door-side bracket composed of a pair of the left and right members. It is preferable to rotate the shafts of the guide case in a required angle range (for example, 90 to 120 degrees). It is preferable to lock one end of the torsion coil spring to the shaft of the guide case and the other end thereof to a spring-locking portion formed on the periphery of the bearing portion of one of the left and right members of the door-side bracket to stretch the torsion coil spring.

### EFFECT OF THE INVENTION

As described above, in the present invention, the wire harness is urged upward by disposing the holding plate rotatably supported through the torsion coil spring in the movement region where the wire harness spanned between the car body and the slide door follows the opening motion of the slide door or the closing motion thereof with the wire harness being curved upward and by bringing the holding plate into contact with the corrugate tube sheathing the wire harness. A pull strength acting on the wire harness decreases at a position intermediate between a position where the slide door is fully opened and a position where the slide door is fully closed. Therefore the construction of the present invention which can be produced at a low cost and is simple is capable of lifting the wire harness by an urging force of the holding plate and effectively preventing the redundant portion of the wire harness from hanging.

### BRIEF DESCRIPTION OF THE DRAWINGS

Fig. 1 shows a wiring construction of a wire harness in a first embodiment of the present invention.
Fig. 2 is an exploded perspective view of a door-side bracket on which the shaft of a guide case is mounted.
Fig. 3 is a sectional view of the door-side bracket on which the shaft of the guide case is mounted
Fig. 4 is a schematic perspective view of a torsion coil spring interposed between the shaft of a holding plate and a rotation guide portion of the guide case.
Fig. 5 shows a conventional art.
Fig. 6 shows a conventional art.

### BEST MODE FOR CARRYING OUT THE INVENTION

Embodiments of the present invention are described below with reference to drawings.

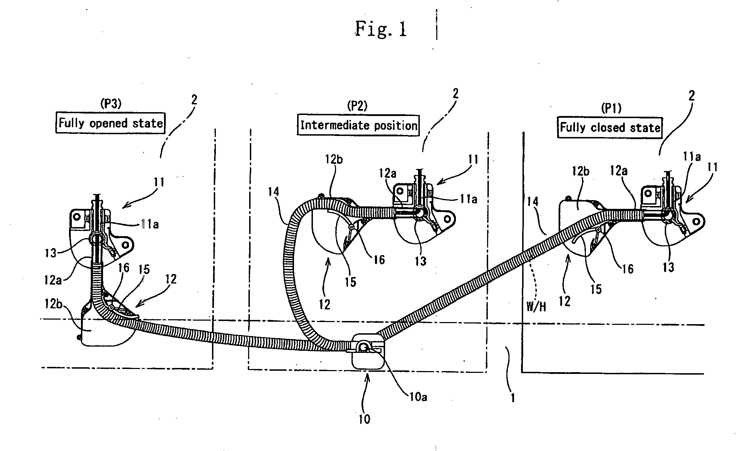

Figs. 1 through 4 show an embodiment of the present invention.

As a wire harness W/H to be cross-wired between a car body 1 and a slide door 2, a group of a plurality of bundled round electric wires (core is coated with insulator) is used. The wire harness W/H may be constructed of a laminated body of a plurality of flat harnesses.

As shown in Fig. 1, a car body-side bracket 10 and a door-side bracket 11 are mounted on the car body 1 and the slide door 2 respectively. A shaft of a guide case 12 guiding the wire harness W/H by holding the wire harness W/H penetrated therethrough is mounted on the door-side bracket 11 such that the guide case 12 is rotatable within a required angle range (120 degrees in the embodiment). A torsion coil spring 13 is mounted at the portion of the door-side bracket 11 where the shaft of the guide case 12 is mounted.

The wire harness W/H wired inside the slide door 2 is penetrated through the door-side bracket 11 and the guide case 12 and drawn out. The wire harness W/H pulled out is extended to the car body 1 and penetrated into the car body-side bracket 10 to wire it into the car body 1. The wire harness W/H cross-wired between the car body 1 and the slide door 2 is sheathed with a corrugate tube 14.

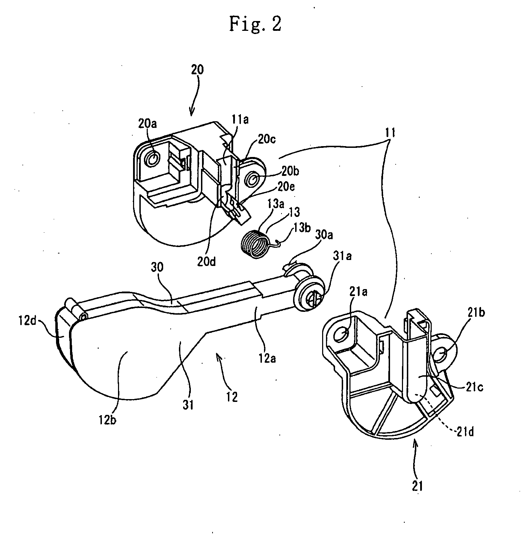

As shown in Fig. 2, the door-side bracket 11 is composed of a left member 20 and a right member 21. One end of the guide case 12 is fixed to the slide door 2 by rotatably sandwiching one end of the guide case 12 between the left member 20 and the right member 21.

To fix the door-side bracket 11 to the slide door 2 with a bolt, door-fixing holes 20a, 20b are formed at corners of the left member 20 of the door-side bracket 11. Fixing holes 21a, 21b communicating with the door-fixing hole 20a, 20b respectively are formed at positions of the right member 21 corresponding to the door-fixing holes 20a, 20b. A wire harness insertion frame portion 20c sectionally concave is projected from an upper end of the left member 20 to its central portion to form a wire harness insertion portion 11a. A circular arc-shaped bearing portion 20d in which a shaft 30a of the guide case 12 is rotatably fitted is provided at a lower end of the wire harness insertion frame portion 20c. The bearing portion 20d is provided with a rotation stopping portion 20e for regulating the angle range of the rotation of the shaft 30a of the guide case 12 within 120 degrees. The bearing portion 20d is also provided with a spring locking portion 20f, communicating with the bearing portion 20d, for locking one end 13b of the torsion coil spring 13 interposed between the bearing portion 20d and the shaft 30a of the guide case 12. The right member 21 is provided with a lid portion 21c closing an opening disposed on a side surface of the wire harness insertion portion 11a. A bearing portion 21d in which the shaft 31a of the guide case 12 is rotatably fitted is provided at a lower end of the lid portion 21c.

The guide case 12 is composed of a left member 30 and a right member 31 having an almost symmetrical configuration. The left member 30 and the right member 31 are fixed to each other with a screw to integrate them with each other. The tubular shaft 30a to be supported by the bearing portion 20d formed on the left member 20 of the door-side bracket 11 is projectingly formed on an outer surface of one end of the left member 30 forming the guide case 12. The tubular shaft 31a to be supported by the bearing portion 21d formed on the right member 21 of the door-side bracket 11 is projectingly formed on an outer surface of one end of the right member 31 forming the guide case 12.

The shaft 30a of the left member 30 of the guide case 12 is set longer than the shaft 31a of the right member 31. The torsion coil spring 13 is wound around the periphery of the shaft 30a. A locking portion 13a projected from the inner periphery of one end of the torsion coil spring 13 is locked to a locking hole (not shown) formed in the shaft 30a. A locking portion 13b projected from the periphery of the other end of the torsion coil spring 13 is locked to a spring-locking portion 20f of the door-side bracket 11 to stretch the torsion coil spring 13.

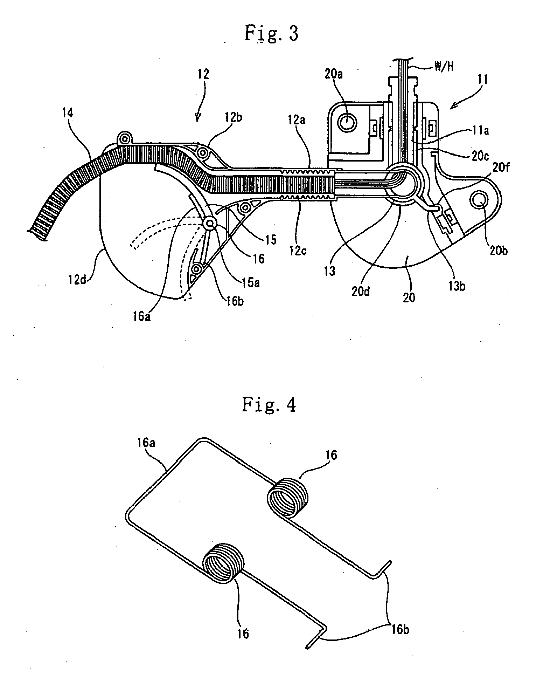

As shown in Fig. 3, inside the guide case 12 composed of the left member 30 and the right member 31, there are provided a horizontally extended linear guide portion 12a, one end of which is continuous with the wire harness insertion portion 11a of the door-side bracket 11 and a rotation guide portion 12b spreading like a fan from the other end of the linear guide portion 12a. On the inner surface of one end of the linear guide portion 12a, there is provided an irregular portion 12c which fits on mountains and valleys disposed at one end of the corrugate tube 14 sheathing the wire harness W/H. The wire harness W/H drawn into the linear guide portion 12 of the guide case 12 from the wire harness insertion portion 11a of the door-side bracket 11 is sheathed with the corrugate tube 14 and drawn out from an opening 12d formed at the front end of the rotation guide portion 12b.

A shaft of a holding plate 15 having an upward circular arc-shaped configuration is rotatably mounted at a lower portion of a smaller-diameter side of the rotation guide portion 12b of the guide case 12 through a torsion coil spring 16 as shown in Fig. 4.

More specifically a shaft 15a is provided at proximal ends of both side surfaces of the holding plate 15. A bearing portion (not shown) for rotatably supporting the shaft 15a of the holding plate 15 is provided on the inner side surface of each of the left member 30 and the right member 31. Each torsion coil spring 16 is wound around the periphery of the shaft 15a of the holding plate 15. One end of one torsion coil spring 16 and that of the other torsion coil spring 16 are connected to each other in the shape of approximately U in a plan view to form a connection portion 16a. The connection portion 16a is disposed below the holding plate 15. The other side of each torsion coil spring 16 is extended in a direction opposite to a direction in which one side thereof is positioned. The end of the other side of each torsion coil spring 16 is bent outward to form locking portions 16b. The locking portions 16b are locked to a locking hole (not shown) formed on the inner side surface of the left and right members 30, 31 of the guide case 12 so that the torsion coil springs 16 urge the holding plate 15 upward.

As described above, by disposing the holding plate 15 at the lower portion of the smaller-diameter side of the rotation guide portion 12b through the torsion coil spring 16 and bringing the holding plate 15 into contact with the corrugate tube 14 of the wire harness W/H inserted through the rotation guide portion 12b, the wire harness W/H is always urged upward.

The other end of the wire harness W/H spanned between the slide door 2 and the car body 1 is inserted through a wire harness insertion portion (not shown) of the car body-side bracket 10, and the wire harness W/H is drawn out from a wire harness outlet 10a disposed on the upper surface of the car body-side bracket 10 and wired inside the car body 1. On the inner peripheral surface surrounding wire harness insertion portion, there is provided an irregular portion which fits on mountains and valleys disposed at the other end of the corrugate tube 14 sheathing the wire harness W/H.

Fig. 1 shows a wiring construction of the wire harness W/H spanned between the car body 1 and the slide door 2 in the embodiment. P1 of Fig. 1 shows a state where the slide door is fully closed. P3 of Fig. 1 shows a state where the slide door is fully opened. P2 of Fig. 1 shows a state where the slide door is disposed at a position intermediate between the fully closed state and the fully opened state.

When the slide door 2 is fully closed (P1), the holding plate 15 is pressed downward by a pull strength acting on a cross-wired portion of the wire harness W/H. As a result, the holding plate 15 generates an urging force (reaction force of spring) of pressing the wire harness W/H upward.

The cross-wired portion of the wire harness W/H follows the opening operation of the slide door 2 with the wire harness W/H being curved upward. At the intermediate position (P2), the pull strength acting on the wire harness W/H decreases. As a result, the cross-wired portion of the wire harness W/H is lifted by the spring reaction force of the holding plate 15. Thereby it is possible to effectively prevent the redundant portion of the wire harness W/H from hanging.

As the slide door 2 approaches the fully opened position (P3), the pull strength acting on the cross-wired portion of the wire harness W/H increases again. As a result, the guide case 12 rotates downward. When the slide door 2 is fully opened (P3), the torsion coil spring 16 of the holding plate 15 and the torsion coil spring 13 interposed between the guide case 12 and the door-side bracket 11 function. As a result, a state in which the reaction forces of the springs have increased is generated. Therefore in the closing operation of the slide door 2, the pull strength acting on the wire harness W/H decreases at the intermediate position (P2), and the wire harness W/H curved upward is lifted by the spring reaction force of the holding plate. Thereby it is possible to prevent the redundant portion of the wire harness W/H from hanging.

As described above, by rotatably mounting the shaft of the guide case 12 on the door-side bracket 11, the wire harness W/H cross-wired is capable of following the opening motion of the slide door 2 or the closing motion thereof more smoothly, and a load to be applied to the wire harness W/H can be decreased.

Further the torsion coil spring 13 is interposed between the guide case 12 and the door-side bracket 11 and the wire harness W/H held by the guide case 12 and the door-side bracket 11 is urged upward. Thus it is possible to prevent the wire harness W/H from being damaged by downward extending the cross-wired portion of the wire harness W/H to absorb a load applied to the wire harness W/H from above, for example, a load applied thereto when it is trodden under foot by a driver or the like.

### EXPLANATION OF REFERENCE SYMBOLS AND NUMERALS

1: car body
2: slide door
10: car body-side bracket
   10a: wire harness outlet
11: door-side bracket
   11a: wire harness insertion portion
   20, 21: left and right members of door-side bracket
   20a, 20b, 21a, 21b: door-fixing hole
   20c: wire harness insertion frame portion
   21c: lid portion
   20d, 21d: bearing portion
   20e: rotation stopping portion
   20f: spring locking portion
12: guide case
   12a: linear guide portion
   12b: rotation guide portion
   12c: irregular portion
   12d: opening
   30, 31: left and right members of guide case
   30a, 31a: shaft
13: torsion coil spring
   13a, 13b: locking portion
14: corrugate tube
15: holding plate
   15a: shaft
16: torsion coil spring
   16a: connection portion
   16b: locking portion
P1: position where slide door is fully closed
P2: intermediate position
P3: position where slide door is fully opened

## Claims

1. A wire harness-mounting apparatus for a slide door (2) comprising:
a corrugate tube (14) for sheathing a wire harness spanned between a car body and the slide door (2);
a door-side bracket (11) to be fixed to the slide door (2);
a guide case (12) rotatably mounted on said door-side bracket (11),
a first torsion coil spring (13) interposed between said guide case (12) and said door-side bracket (11), such that said guide case (12) is urged upward;
**characterized in that**
a holding plate (15) which contacts said corrugate tube (14) is rotatably mounted on said guide case (12) through a second torsion coil spring (16), such that said holding plate (15) is urged upward by said torsion coil spring (16).

2. A wire harness-mounting apparatus for a slide door according to claim 1, wherein
said guide case (12) comprises a horizontally extended linear guide portion (12a), one end of which is continuous with a wire harness insertion portion (11a) of said door-side bracket (11) and a rotation guide portion (12b) spreading like a fan from the other end of said linear guide portion (12a); and
a shaft (15a) of said holding plate (15) is mounted at a lower portion of a smaller-diameter side of said rotation guide portion (12b), and said holding plate (15) has an upward circular arc-shaped configuration.

## Patentansprüche

1. Eine Montagevorrichtung für den Kabelbaum einer Schiebetür (2), die Folgendes umfasst:
eine gewellte Röhre (14) zur Ummantelung eines Kabelbaums, der zwischen einer Karosserie und der Schiebetür (2) gespannt ist;
ein Türseiten-Halter (11), der an der Schiebetür (2) zu befestigen ist;
ein Führungs-Gehäuse (12), das drehbar am genannten Türseiten-Halter (11) befestigt wird,
eine erste Torsions-Schraubenfeder (13), die zwischen dem genannten Führungs-Gehäuse (12) und dem genannten Türseiten-Halter (11) derart eingefügt wird, dass das genannte Führungs-Gehäuse (12) nach oben forciert wird;
**dadurch gekennzeichnet, dass**
eine Halteplatte (15), die den Kontakt zur genannten gewellten Röhre (14) herstellt, am genannten Führungs-Gehäuse (12) durch eine zweite Torsions-Schraubenfeder (16) derart drehbar montiert wird, dass die genannte Halteplatte (15) durch die genannte Torsions-Schraubenfeder (16) nach oben forciert wird.

2. Eine Montagevorrichtung für den Kabelbaum einer Schiebetür nach Anspruch 1, wobei
das genannte Führungs-Gehäuse (12) einen horizontal ausgedehnten linearen Führungsabschnitt (12a) umfasst, von dem ein Ende in Bezug auf einen Kabelbaum-Einführungsabschnitt (11a) des genannten Türseiten-Halters (11) fortlaufend ist, und einen Rotationsführungsabschnitt (12b) umfasst, der sich vom anderen Ende des genannten linearen Führungsabschnitts (12a) fächerartig aufweitet; und
eine Achse (15a) der genannten Halteplatte (15) im Bereich eines unteren Abschnitts einer Seite mit geringerem Durchmesser des genannten Rotationsführungsabschnitts (12b) montiert wird, und wobei die genannte Halteplatte (15) eine nach oben gerichtete, kreisbogenförmige Konfiguration aufweist.

## Revendications

1. Un dispositif de montage de faisceau de câbles pour une porte coulissante (2), comprenant :
un tube ondulé (14) pour revêtir un faisceau de câbles s'étendant entre une carrosserie et la porte coulissante (2) ;
un support de partie latérale de porte (11) à fixer à la porte coulissante (2) ;
un boîtier de guidage (12) monté de façon rotative audit support de partie latérale de porte (11),
un premier ressort de torsion hélicoïdal (13) interposé entre ledit boîtier de guidage (12) et ledit support de partie latérale de porte (11), de manière que ledit boîtier de guidage (12) soit poussé vers le haut ;
**caractérisé en ce que**
une plaque de maintien (15) qui est en contact avec ledit tube ondulé (14) est montée de façon rotative sur ledit boîtier de guidage (12) à travers un deuxième ressort de torsion hélicoïdal (16), de manière que ladite plaque de maintien (15) soit poussée vers le haut par ledit ressort de torsion hélicoïdal (16).

2. Un dispositif de montage de faisceau de câbles pour une porte coulissante d'après la revendication 1, sachant que
ledit boîtier de guidage (12) comprend une portion de guidage linéaire (12a) qui s'étend horizontalement, dont une extrémité est formée en continuité avec une portion d'insertion de faisceau de câbles (11a) dudit support de partie latérale de porte (11), et une portion de guidage rotatif (12b) s'étendant en éventail à partir de l'autre extrémité de ladite portion de guidage linéaire (12a) ; et
une tige (15a) de ladite plaque de maintien (15) est montée au niveau d'une portion inférieure d'un côté de diamètre inférieur de ladite portion de guidage rotatif (12b), et que ladite plaque de maintien (15) présente une configuration en forme d'arc circulaire orienté vers le haut.
